# EUROPÄISCHE PATENTSCHRIFT

(11) **EP 3 743 340 B1**
(45) Veröffentlichungstag und Bekanntmachung des Hinweises auf die Patenterteilung: **07.06.2023**
(21) Anmeldenummer: 19700794.1
(22) Anmeldetag: 15.01.2019
(51) Int. Cl.: B65D 1/34, A47B 87/02, B65D 19/00, B65G 47/52, B65G 1/04, F16B 12/00, B65D 1/44

(54) **TABLAR FÜR EINEN LAGERLIFT**
TRAY FOR A STORAGE LIFT
PLATEAU POUR UN ASCENSEUR DE STOCKAGE

(30) Priorität: 24.01.2018 DE 102018201127
(43) Veröffentlichungstag der Anmeldung: 02.12.2020
(73) Patentinhaber: Kardex Produktion Deutschland GmbH, 86476 Neuburg/Kammel (DE)
(72) Erfinder: BOUCHÉ, Norbert, 76829 Landau (DE)
(74) Vertreter: Grünecker Patent- und Rechtsanwälte PartG mbB
(86) Internationale Anmeldenummer: PCT/EP2019/050860
(87) Internationale Veröffentlichungsnummer: WO 2019/145187

(56) Entgegenhaltungen:
- DE-U1- 8 326 738
- DE-U1- 20 105 582
- US-A1- 2007 068 427

## Beschreibung

Die Erfindung betrifft ein Tablar für einen Lagerlift, mit einem Boden zum Abstellen von Lagergut, wobei das Tablar an wenigstens einer Längsseite mit wenigstens einer den Boden begrenzenden Umkantung versehen ist, wobei die Umkantung in einem mit dem Boden verbundenen Vertikalabschnitt im Wesentlichen quer zum Boden verläuft, wobei die Umkantung wenigstens einen Verstärkungsabschnitt aufweist, der sich von dem Vertikalabschnitt weg erstreckt, und wobei der Vertikalabschnitt und der wenigstens eine Verstärkungsabschnitt einen stumpfen Winkel zwischen sich einschließen.

Tablare für Lagerlifte sind bekannt. Sie dienen zum Lagern von Lagergut in einem Lagerlift und sind in der Regel in einem solchen beweglich aufgenommen. Tablare müssen ausreichend Tragfähigkeit für das aufzunehmende Lagergut besitzen.

In der Regel weisen Tablare an wenigstens einer ihrer Längsseiten Umkantungen auf. Umkantungen werden auch als Aufkantungen oder Abkantungen bezeichnet. Diese Umkantungen können mehrere Aufgaben erfüllen. Zunächst einmal können Sie eine den Boden begrenzende Wand bilden um die Lagerfläche zu begrenzen. Insbesondere der Vertikalabschnitt kann als eine den Boden begrenzende Wand dienen. Darüber hinaus können die Umkantungen zur Versteifung des Tablars dienen. Letztendlich können Umkantungen auch dazu genutzt werden, ein Tablar zu bewegen. Beispielsweise können Umkantungen so geformt sein, dass Transport-, Hebe-, oder Zugeinrichtungen mit den Tablaren wechselwirken können. Beispielsweise kann eine Transporteinrichtung mit zumindest einem Teil einer Umkantung in Eingriff gebracht werden, um das Tablar zu befördern. Bei der Belastung eines Tablars können die Umkantungen Kräfte aufnehmen, sodass ein Durchbiegen des Tablars verhindert wird. Die Umkantung steht einem Durchbiegen des Tablars durch sein Flächenträgheitsmoment entgegen. Tablare, insbesondere deren Umkantungen, werden in der Regel durch Biegeverfahren aus blechförmigen Werkstoffen bzw. Blechen hergestellt.

Aus der US 2007/068427 A1 ist ein Regalrahmen mit Aufnahmen für runde Artikel bekannt. Die Aufnahmen weisen an ihren Längsseiten Umkantungen auf, die zunächst in einem rechten Winkel zum Boden und dann nach außen hin abgewinkelt verlaufen. Aus der DE 201 05 582 U1 ist ein Lagerlift mit sich gegenüberliegenden Regalsäulen bekannt. Aus der DE 83 26 738 U1 ist ein Lager- bzw. Transportkasten für Regallager mit automatischen Beschickungs- und Entnahmevorrichtungen bekannt, der ein Sickenblech als Boden besitzt.

Es ist die Aufgabe der Erfindung, ein Tablar der vorbenannten Art bereitzustellen dessen wenigstens eine Umkantung auch starken Belastungen des Tablars durch Beladung des Tablarbodens standhält und sich einfach herstellen lässt.

Für ein Tablar der eingangs genannten Art ist diese Aufgabe dadurch gelöst, dass die Umkantung an ihrem distalen Ende wenigstens einen Zugabschnitt aufweist, an den wenigstens ein Zugelement eines Lagerlifts angreifen kann.

Durch den wenigstens einen Verstärkungsabschnitt, welcher sich unter Bildung eines stumpfen Winkels zum Vertikalabschnitt von diesem weg erstreckt, kann das Flächenträgheitsmoment der Umkantung erhöht werden. Dies wird dadurch erreicht, dass die Höhe des Vertikalabschnitts vergrößert wird. Durch den Winkel kann dabei jedoch im Vergleich zu einem lediglich durchgängig geraden Verlauf des Vertikalabschnitts die Herstellung der Umkantung vereinfacht sein. Insbesondere kann durch den Winkel die Kollision von Teilen der Umkantung mit Biegewerkzeugen verhindert werden. Dies gilt insbesondere für den Fall, dass die Umkantung weitere Elemente aufweist, die sich an den Verstärkungsabschnitt anschließen. Durch den stumpfen Winkel kann bei der Formung der Umkantung Raum für Biegewerkzeuge, beispielsweise Stempel, geschaffen werden.

Insgesamt ermöglicht es die erfindungsgemäße Umkantung also, die Stabilität eines Tablars zu erhöhen, ohne dabei neue Werkzeuge für das Biegen erforderlich zu machen. Stattdessen können Werkzeuge, wie sie zur Formung von Umkantungen ohne den erfindungsgemäßen Verstärkungsabschnitt genutzt werden, weiterverwendet werden. Es ist zudem noch anzumerken, dass der Verstärkungsabschnitt die Stabilität des Tablars bei gleichbleibender Materialstärke des Ausgangsmaterials erhöhen kann. Das Tablar kann also eine erhöhte Stabilität gegenüber einem Tablar aufweisen, welches aus einem gleich dicken Ausgangsmaterial gefertigt ist, aber den erfindungsgemäßen Verstärkungsabschnitt nicht aufweist.

Der stumpfe Winkel bezieht sich auf einen Querschnitt durch die Umkantung quer zu der Längsseite. Der Begriff "Boden des Tablars" bezieht sich auf eine horizontale, bevorzugt durchgängige, Struktur, die einen Aufnahmebereich für Lagergut des Tablars nach unten hin begrenzt. Das Lagergut liegt dabei zumindest abschnittsweise auf einer Bodenfläche, welche von oben her zugänglich ist, auf.

Es ist nicht ausgeschlossen, dass sich weitere Zwischenabschnitte zwischen dem Vertikalabschnitt und dem Verstärkungsabschnitt befinden. Bevorzugt sind diese aber direkt aneinander anliegend, bzw. ineinander übergehend angeordnet.

Die Umkantung weist an ihrem distalen Ende wenigstens einen Zugabschnitt auf. Dies ist vorteilhaft, da am Zugabschnitt wenigstens ein Zugelement eines Lagerlifts angreifen kann. Das distale Ende ist dabei im Querschnitt quer zu der Längsseite dasjenige Ende der Umkantung, welches vom übrigen Tablar, insbesondere dessen Boden, entfernt angeordnet ist.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen.

Der Vertikalabschnitt und der wenigstens eine Verstärkungsabschnitt können einen Winkel zwischen 125° und 145° zwischen sich einschließen. Dadurch kann ein guter Kompromiss zwischen einem erhöhten Flächenträgheitsmoment und einer vereinfachten Herstellung erreicht werden. Bevorzugt beträgt der Winkel 135° ± 3°.

Um einen ungestörten Zugang zum Boden des Tablars zu ermöglichen, erstreckt sich der wenigstens eine Verstärkungsabschnitt, insbesondere mit seinem vom Vertikalabschnitt abgewandten Ende, bevorzugt vom übrigen Tablar weg

Um für ein fertiges Tablar Platz für ein Transportmittel, beispielsweise eine Zugvorrichtung zu schaffen, und um bei der Herstellung des Tablars Platz für ein Umformungswerkzeug zu schaffen, kann sich wenigstens ein Beabstandungsabschnitt zwischen dem Vertikalabschnitt und dem wenigstens einen Zugabschnitt erstrecken. Der Beabstandungsabschnitt kann den Zugabschnitt vom Vertikalabschnitt beabstanden und gleichzeitig miteinander verbinden. Der wenigstens eine Beabstandungsabschnitt erstreckt sich dabei bevorzugt von dem Verstärkungsabschnitt zum Zugabschnitt.

Alternativ dazu kann der Beabstandungsabschnitt auch identisch mit dem Verstärkungsabschnitt sein, bzw. eine Verlängerung desselben darstellen.

Bevorzugt schließen der wenigstens eine Beabstandungsabschnitt und der wenigstens eine Verstärkungsabschnitt einen Winkel zwischen 70° und 110° zwischen sich ein. Insbesondere können die Abschnitte einen Winkel von 90° ± 3° zwischen sich einschließen.

Der wenigstens eine Beabstandungsabschnitt kann mit dem wenigstens einen Verstärkungsabschnitt einen im Wesentlichen dachförmigen, insbesondere satteldachförmigen, Querschnitt, insbesondere quer zur Längsseite, bilden.

Um das Abrutschen einer Zugvorrichtung beim Ziehen des Tablars zu verhindern, erstreckt sich der wenigstens eine Zugabschnitt bevorzugt quer zum Boden. Insbesondere kann sich der wenigstens eine vertikale Zugabschnitt parallel zum Vertikalabschnitt erstrecken.

Das Tablar ist bevorzugt als Biegeteil gebildet. Es kann beispielsweise als Stanzbiegeteil gefertigt sein. Jedoch sind auch andere Verfahren als Stanzen möglich, insbesondere Lasern. Bei dem Tablar können wenigstens zwei, bevorzugt alle, der folgenden Elemente monolithisch miteinander gebildet sein: Boden, Vertikalabschnitt, Verstärkungsabschnitt, Beabstandungsabschnitt, Zugabschnitt. Dies soll jedoch die Möglichkeit eines mehrteilig aufgebauten Tablars nicht ausschließen.

Die erfindungsgemäße Umkantung sorgt, wie oben beschrieben, dafür, dass die Stabilität des Tablars erhöht ist. Dies bedeutet, dass ein erfindungsgemäßes Tablar stärker belastet werden kann als ein vergleichbares Tablar ohne die erfindungsgemäße Umkantung.

Um auch den Boden des Tablars an die durch die erfindungsgemäße Umkantung verliehene höhere Belastbarkeit anzupassen, ist eine weitere vorteilhafte Ausführungsform des erfindungsgemäßen Tablars vorgesehen, bei der der Boden des Tablars an wenigstens einer von wenigstens einem Randbereich beabstandeten Stelle plastisch verformt ist.

Auf diese vorteilhafte Ausführungsform ist im Folgenden eingegangen. Zwar stellt diese Ausführungsform eine bevorzugte Ausführungsform des erfindungsgemäßen Tablars dar, jedoch ist die erfindungsgemäße Umkantung auch für Tablare ohne den im Folgenden näher beschriebenen Tablarboden vorteilhaft.

Die wenigstens eine plastisch verformte Stelle des Bodens kann zu einer Spannung des Materials des Bodens, insbesondere des blechförmigen Werkstoffs, führen. Diese Spannung kann wiederum eine Wölbung des Bodens nach oben erzeugen, wobei die Wölbung nach oben in Bezug auf ein vergleichbares Tablar ohne die wenigstens eine plastisch verformte Stelle bezogen ist. Mit anderen Worten kann der Boden des Tablars, der ohne die wenigstens eine plastisch verformte Stelle durch sein Eigengewicht nach unten durchhängen würde, durch die wenigstens eine plastisch verformte Stelle weniger stark durchhängen, oder, statt nach unten durchzuhängen, horizontal verlaufen oder nach oben gewölbt sein. Das Einbringen wenigstens einer plastisch verformten Stelle führt also zu einer negativen Vorspannung im Boden, bzw. zu einem Wölben des Bodens nach oben, im Vergleich zu einem Tablar ohne die erfindungsgemäße wenigstens eine plastisch verformte Stelle.

Diese indirekte Ausbildung der Wölbung kann vermutlich dadurch erzeugt werden, dass an der wenigstens einen plastisch verformten Stelle Material des Bodens seitlich, also von der wenigstens einen plastisch verformten Stelle weg, verdrängt wird. Diese Verdrängung von Material kann zu einem, insbesondere seitlich gerichteten, Druck im Boden des Tablars führen. Da das Tablar in der Regel zu seinen Seiten hin begrenzt ist und diese Seiten versteift sein können, kann der Boden auf den durch die plastische Verformung erzeugten Druck mit Ausbildung der Wölbung reagieren.

Durch die nach oben gerichtete Wölbung des Bodens kann das Tablar im unbelasteten Zustand, also ohne Lagergut, negativ vorgeformt, bzw. negativ vorgespannt sein. Wird das Tablar nun beladen und steigt die auf den Boden wirkende Belastung, so wölbt sich der Boden nach unten. Durch die negative Verformung nach oben wird der Boden weniger nach unten durchgewölbt als dies bei einem vergleichbaren Tablar der Fall wäre, dessen Boden keine plastisch verformte Stelle aufweist. Mit anderen Worten muss der Boden bei einer Belastung durch Lagergut zunächst die nach oben gerichtete Wölbung überwinden, bevor er sich durch das Gewicht des Lagerguts nach unten wölbt. Dadurch kann eine nach unten gerichtete Wölbung des Bodens minimiert werden. Im Vergleich zu einem Tablar ohne die plastisch verformte Stelle wird der Boden des erfindungsgemäßen Tablars bei gleicher Belastung also weniger stark nach unten durchgewölbt. Auf diese Weise können mehrere Tablare mit geringem vertikalen Abstand übereinander in einem Lagerlift untergebracht werden. Da die nach unten gerichtete Durchwölbung im Vergleich zu einem herkömmlichen Tablar verringert ist, kann das Tablar bei gleichen Platzerfordemissen also eine höhere Traglast aufnehmen.

Die wenigstens eine plastisch verformte Stelle ist von der oben beschriebenen, durch die plastisch verformte Stelle erzeugte Verformung des Tablarbodens zu unterscheiden. Während die wenigstens eine plastisch verformte Stelle lokal im Tablarboden, insbesondere bezogen auf die Flächenausdehnung, begrenzt ist, bezieht sich der Bereich der negativen Vorspannung oder der Wölbung nach oben auf flächenmäßig größere Bereiche des Bodens, je nach Ausgestaltung kann dieser Bereich auch den Großteil des Bodens ausmachen. Für den Begriff "blechförmiger Werkstoff" wird im Folgenden der Kürze halber der Begriff "Blech" verwendet. Das Tablar, insbesondere der Boden, kann aus einem Blech geformt sein. Alternativ oder zusätzlich kann das Tablar auch aus einer Mehrzahl von Blechen gebildet sein. Ebenso ist nicht ausgeschlossen, dass ein fertiges Tablar weitere Teile aufweist, so dass es aus mehreren Einzelteilen zusammengesetzt ist. Beispielsweise kann das Tablar auch mit angebrachten Eckauflagen versehen sein.

An der wenigstens einen plastisch verformten Stelle kann der gewölbte Boden einen Versatz nach oben aufweisen. Mit anderen Worten kann der gewölbte Boden an der wenigstens einen plastisch verformten Stelle zumindest abschnittsweise nach oben versetzt sein. Durch den Versatz des Bodens nach oben kann die Tendenz verstärkt werden, dass die durch die wenigstens eine plastisch verformte Stelle erzeugte Vorformung bzw. Vorspannung negativ ist, oder, mit anderen Worten, dass sich die Wölbung des Bodens nach oben hin ausrichtet. Der Versatz ist bevorzugt durch die wenigstens eine plastisch verformte Stelle lokal begrenzt. Mit anderen Worten erstreckt sich eine Wölbung des Bodens in der Regel über einen größeren Anteil der Bodenfläche des Tablars als der Versatz.

Wie oben beschrieben, kann die negative Vorspannung des Bodens durch das Einbringen einer plastischen Verformung an wenigstens einer Stelle im Boden, also indirekt, erzeugt werden. Die wenigstens eine plastisch verformte Stelle hat dabei bevorzugt eine geringere Ausdehnung über die Bodenfläche als der Bereich der negativen Vorspannung bzw. der Wölbung. Es ist außerdem zu erwähnen, dass sich der Bereich der negativen Vorspannung, bzw. der Wölbung des Bodens, bevorzugt über wenigstens 2/3 der Bodenfläche, besonders bevorzugt über die gesamte Bodenfläche erstreckt. Die wenigstens eine plastisch verformte Stelle erstreckt sich dagegen bevorzugt über weniger als 1/10 der Bodenfläche.

Bevorzugt ist das Tablar, insbesondere dessen Boden, im Wesentlichen rechteckig. Die Rechteckform besitzt dabei Schmalseiten und quer zu diesen verlaufende Längsseiten. Dabei verlaufen die Längsseiten parallel zu einer Längsrichtung des Tablars und die Schmalseiten parallel zu einer Tiefenrichtung des Tablars. Bevorzugt wird mehr Material in Längsrichtung des Tablars verdrängt als in der Tiefenrichtung. Dies kann die Tendenz zur Erzeugung der negativen Vorspannung bzw. der Wölbung nach oben verstärken.

Um wirksam eine negative Vorspannung im Boden zu erzeugen, kann die wenigstens eine plastisch verformte Stelle durch eine längliche Vertiefung gebildet sein. Die längliche Vertiefung kann beispielsweise eine Sicke sein. Dabei ist durch die wenigstens eine längliche Vertiefung bevorzugt ein Versatz des Bodens nach oben gebildet. Die wenigstens eine längliche Vertiefung bzw. die wenigstens eine Sicke kann durch die Beladung erzeugte, auf den Boden wirkende Kräfte, zu der wenigstens einen erfindungsgemäßen Umkantung leiten.

Gemäß einer weiteren vorteilhaften Ausgestaltung kann der Boden mit einer Mehrzahl von voneinander beabstandeten länglichen Vertiefungen versehen sein. Die wenigstens eine längliche Vertiefung erstreckt sich mit seiner Längsrichtung bevorzugt parallel zum Boden. Bevorzugt verläuft die wenigstens eine längliche Vertiefung quer zu wenigstens einem Rand des Tablars.

Das Tablar kann im Wesentlichen länglich sein und eine Längsrichtung der wenigstens einen länglichen Vertiefung im Wesentlichen quer zu einer Längsrichtung des Tablars verlaufen. Dadurch wird mehr Material in Längsrichtung des Tablars als quer dazu verdrängt, so dass die wenigstens eine längliche Vertiefung zur Wölbung des Bodens beitragen kann.

Alternativ zur Ausrichtung quer zur Längsrichtung des Tablars kann die wenigstens eine längliche Vertiefung auch eine andere Ausrichtung aufweisen. Insbesondere kann die wenigstens eine längliche Vertiefung diagonal verlaufen, d.h. mit einem Richtungsanteil quer zur Längsrichtung des Tablars und mit einem Richtungsanteil parallel zur Längsrichtung. Ebenso kann es möglich sein, dass das Tablar mit einer Mehrzahl von länglichen Vertiefungen versehen ist, welche unterschiedliche Ausrichtungen aufweisen. Bevorzugt weist das Tablar eine Mehrzahl von parallel zueinander verlaufenden länglichen Vertiefungen auf. Diese können insbesondere gruppenweise parallel zueinander verlaufen, oder, mit anderen Worten, Gruppen von miteinander parallel verlaufenden Vertiefungen bilden.

Gemäß einer bevorzugten Ausgestaltung erstreckt sich die wenigstens eine längliche Vertiefung durchgängig entlang ihrer Längsachse. Alternativ dazu kann die wenigstens eine längliche Vertiefung jedoch auch an wenigstens einer Stelle unterbrochen sein. Ebenso ist es möglich, eine Reihe von Vertiefungen, welche nicht zwingend länglich sein müssen, entlang einer Längsachse aneinanderzureihen.

Die wenigstens eine längliche Vertiefung, vorzugsweise alle längliche Vertiefungen, sofern mehrere vorhanden sind, weist bevorzugt eine Länge auf, welche größer als 1/3, besonders bevorzugt größer als 2/3 einer Tablartiefe beträgt. Dadurch kann wirksam die Wölbung des Bodens verursacht werden. Die Tablartiefe bezieht sich dabei auf die Tiefe des Tablarbodens, also der nutzbaren Fläche.

Ist durch die wenigstens eine plastisch verformte Stelle ein Versatz gebildet, so weist dieser Versatz bevorzugt wenigstens eine Höhe auf, die höchstens der Stärke des Bodens entspricht. Mit der Stärke des Bodens ist dabei insbesondere die Dicke eines Blechs bzw. des blechförmigen Werkstoffs gemeint, aus dem der Boden gebildet ist. Die Höhe des Versatzes wird dabei in Bezug auf die Bodenfläche bestimmt. Die bevorzugte maximale Höhe des Versatzes gilt vorzugsweise auch für den Fall, dass die wenigstens eine plastisch verformte Stelle durch eine längliche Vertiefung in Form einer Sicke gebildet ist. Diese für typische Sicken vergleichsweise niedrige Sickenhöhe kann ausreichend sein, um die Tragfähigkeit des Tablars zu erhöhen, da die durch die Sicken verursachte plastische Verformung des Bodens bereits ausreicht, um die negative Vorspannung bzw. die Wölbung des Bodens nach oben zu erzeugen. Die niedrige Höhe des Versatzes, insbesondere einer Sicke, ist vorteilhaft, um das Volumen des über dem Boden befindlichen Aufnahmebereichs für Lagergut nicht unnötig stark einzuschränken. Darüber hinaus ist die niedrige Höhe des Versatzes bei der Herstellung des Tablars von Vorteil. Insbesondere dann, wenn der wenigstens eine Versatz eingebracht wird, bevor seitliche Kanten des Tablars durch Umkantung geformt werden, wird durch die geringe Höhe des Versatzes vermieden, dass sich das Blech durch das Einbringen des Versatzes so stark verzieht, dass eine weitere Bearbeitung erschwert wird.

Bevorzugt weist der wenigstens eine Versatz eine Höhe auf, die mindestens das 0,25-fache und höchstens das 1-fache, mehr bevorzugt mindestens das 0,4-fache, und höchstens das 0,7-fache der Stärke des Bodens beträgt. Ein guter Kompromiss, der eine ausreichende Wölbung des Bodens hervorruft und gleichzeitig fertigungstechnisch unproblematisch zu sein scheint, kann durch eine Höhe des Versatzes erreicht werden, die in etwa dem 0,55 (± 0,05)-fachen der Stärke des Bodens entspricht. Dies entspricht bei einer Blechdicke von 2 mm einer Höhe des Versatzes von 1,1 ± 0,1 mm.

Wenigstens eine der länglichen Vertiefungen, vorzugsweise alle sofern mehrere vorhanden sind, können einen trapezförmigen Querschnitt aufweisen. Der Querschnitt ist dabei quer zur Längsrichtung der länglichen Vertiefung gesehen. Der trapezförmige Querschnitt kann dabei wie bei einem Trapezblech gebildet sein, d.h., gleichschenklig, symmetrisch und mit der kurzen Grundseite des Trapezes nach oben, also in den Aufnahmebereich hinein, versetzt. Ein solcher Querschnitt kann zum einen vorteilhaft sein, um die Wölbung des Bodens zu erzeugen. Zum anderen lässt sich eine längliche Vertiefung mit einem solchen Querschnitt, insbesondere eine Sicke, einfach herstellen. Fertigungsbedingt kann der zuvor beschriebene trapezförmige Querschnittabgerundet sein. Das heißt, die Übergänge zwischen dem übrigen Boden und den Schenkeln und die Übergänge von den Schenkeln zu der kurzen Grundseite weisen dann keine scharfen Übergänge auf, sondern gehen gerundet ineinander über. Auch können die Schenkel und die kurze Grundseite selbst fertigungsbeding vom geradlinigen Verlauf abweichen und gerundet sein.

Alternativ dazu kann die wenigstens eine längliche Vertiefung einen halbrunden Querschnitt aufweisen, wobei die konvexe Seite in den Aufnahmebereich, also nach oben hin gewölbt bzw. versetzt ist. Andere Querschnittsformen sind ebenfalls möglich, insbesondere solche, wie sie für Sicken bekannt sind. Lediglich beispielhaft seien hier ein kastenförmiger und ein dreieckiger Querschnitt genannt. Darüber hinaus ist es auch möglich, dass nicht alle länglichen Vertiefungen mit gleichen Querschnitten versehen sind.

Gemäß einer vorteilhaften Ausführungsform weist das Tablar eine Vielzahl von länglichen Vertiefungen auf, welche äquidistant über das Tablar verteilt sind. Dabei sind die länglichen Vertiefungen bevorzugt mit ihren Längsrichtungen parallel zueinander und quer zu den Längsrichtungen im gleichen Abstand voneinander angeordnet. Darüber hinaus fluchten die länglichen Vertiefungen bevorzugt miteinander. Mit anderen Worten können die auf die Längsrichtungen der länglichen Vertiefungen bezogenen Enden derselben jeweils entlang einer parallel zur Längsrichtung des Tablars verlaufenden Linie angeordnet sein.

Alternativ zur äquidistanten Anordnung der länglichen Vertiefungen können diese auch eine andere Verteilung aufweisen. Beispielsweise können Abstände zwischen zwei benachbarten länglichen Vertiefungen von den Schmalseiten des Tablars zu einer Mitte des Tablars hin abnehmen. Dabei kann der Abstand zwischen den beiden äußersten benachbarten länglichen Vertiefungen, welche einer Schmalseite am nächsten sind, mehr als doppelt so groß sein wie der Abstand zweier innerer länglicher Vertiefungen im Bereich der Mitte des Tablars.

Bevorzugt sind die länglichen Vertiefungen symmetrisch über das Tablar verteilt. Insbesondere können die länglichen Vertiefungen spiegelsymmetrisch bezüglich einer durch die Mitte des Tablars und quer zu dessen Längsrichtung verlaufenden Spiegelebene verteilt sein.

Parallel zu den Schmalseiten des Tablars sind die länglichen Vertiefungen bevorzugt mittig angeordnet, d.h. bevorzugt weist wenigstens eine längliche Vertiefung zu beiden Längsseiten des Tablars einen im Wesentlichen gleichen Randabstand auf, wobei fertigungstechnische Toleranzen im Bereich von etwa 5 % der Tablartiefe möglich sind.

Wie bereits oben beschrieben, ist das Tablar bevorzugt als Stanzbiegeteil gebildet. Alternativ oder zusätzlich zum Stanzbiegen können auch andere Umformungstechniken zu Einsatz kommen. Insbesondere Prägen oder Tiefziehen. Bevorzugt ist das Tablar als Stanzbiegeteil mit geprägten und/oder tiefgezogenen Bereichen gebildet. Die wenigstens eine plastisch verformte Stelle, insbesondere die wenigstens eine längliche Vertiefung, ist bevorzugt monolithisch mit dem Boden des Tablars gebildet. Darüber hinaus sind bevorzugt auch die wenigstens eine erfindungsgemäße Umkantung, vorzugsweise alle Umkantungen, monolithisch mit dem Boden des Tablars gebildet. Mit anderen Worten können der Tablarboden, die wenigstens eine plastisch verformte Stelle und/oder die wenigstens eine Umkantung aus einem einzigen Blech durch Umformung hergestellt sein.

Zur Erzeugung der wenigstens einen plastisch verformten Stelle kann insbesondere wenigstens ein Verdrängungskörper von unten in den Boden gedrückt werden. Solch ein Verdrängungskörper kann insbesondere durch einen Stempel oder eine Rolle gebildet sein. Die wenigstens eine plastisch verformte Stelle kann auch durch Tiefziehen und/oder andere geeignete Techniken gebildet werden.

Die erfindungsgemäße Lösung erlaubt es, die Tragfähigkeit eines Tablars ohne zusätzliche Versteifungselemente wie beispielsweise angeschweißte Träger oder Profile zu erhöhen. Es ist jedoch nicht ausgeschlossen, ein erfindungsgemäßes Tablar, auch wenn dieses beispielsweise mit wenigstens einer länglichen Vertiefung versehen ist, mit zusätzlichen Elementen zur Versteifung zu versehen. Lediglich beispielhaft sei hier die Möglichkeit genannt, unter dem Boden wenigstens ein Profil anzubringen, welches parallel oder quer zur Tablarlängsrichtung verläuft. Ein solches Profil kann beispielsweise ein Doppelkanalprofil sein.

Die negative Vorspannung des Bodens - sofern vorhanden - bzw. die Wölbung weist bevorzugt eine Größe von +2 bis -15 mm, bevorzugt -3 bis -6 mm auf. Die Werte <0 bis -15 mm repräsentieren dabei eine Wölbung des Bodens nach oben. Die Werte >0 bis +2 mm eine Durchwölbung nach unten. Wie bereits eingangs erwähnt, profitiert das erfindungsgemäße Tablar auch von einer Wölbung im Bereich von >0 bis 2 mm, sofern ein Tablar ohne die wenigstens eine plastisch verformte Stelle stärker nach unten durchgewölbt ist. Die Größe wird dabei zwischen dem obersten Punkt und dem untersten Punkt der Wölbung beziehungsweise des gewölbten Bodens, jeweils auf der Bodenfläche oder jeweils an der Bodenunterseite, gemessen. Der unterste Punkt der Wölbung kann beispielsweise am Boden in unmittelbarer Nähe zu einer Umkantung liegen. Der oberste Punkt der Wölbung liegt beim Vorhandensein genau einer Wölbung in der Regel in der Mitte des Tablars. Wird das Tablar mit einer zusätzlichen Versteifung, wie etwa einem ein- oder angebrachten Profil versehen, so liegt der oberste Punkt der Wölbung in der Regel in der Mitte der nicht-versteiften Fläche des Bodens.

Im Folgenden ist die Erfindung beispielhaft anhand verschiedener Ausführungsformen mit Bezug auf die Zeichnungen näher erläutert. Die bei den Ausführungsformen beispielhaft dargestellten Merkmalskombinationen können nach Maßgabe der obigen Ausführung entsprechend der für einen bestimmten Anwendungsfall notwendigen Eigenschaften des erfindungsgemä-βen Tablars durch weitere Merkmale ergänzt werden. Auch können, ebenfalls nach Maßgabe der obigen Ausführung, einzelne Merkmale bei den beschriebenen Ausführungsformen weggelassen werden, wenn es auf die Wirkung dieses Merkmals in einem konkreten Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: eine perspektivische Darstellung einer ersten Ausführungsform eines erfindungsgemäßen Tablars;
- Fig. 2: eine Aufsicht auf das Tablar aus Fig. 1;
- Fig. 3: eine beispielhafte übertriebene Darstellung der Wölbung eines erfindungsgemäßen Tablars in einem Schnitt durch die Tablarmitte;
- Fig. 4: eine perspektivische Darstellung einer zweiten Ausführungsform eines erfindungsgemäßen Tablars;
- Fig. 5: eine Aufsicht auf das Tablar aus Fig. 4;
- Fig. 6: eine Aufsicht auf eine weitere beispielhafte Ausführungsform eines erfindungsgemäßen Tablarbodens;
- Fig. 7: eine Aufsicht auf eine weitere beispielhafte Ausführungsform eines erfindungsgemäβen Tablarbodens;
- Fig. 8: eine perspektivische, geschnittene Darstellung einer vorteilhaften Ausführungsform einer länglichen Vertiefung;
- Fig. 9: einen Querschnitt durch die längliche Vertiefung aus Fig. 8;
- Fig. 10: einen Querschnitt durch eine weitere vorteilhafte Form einer länglichen Vertiefung; und
- Fig. 11: einen Querschnitt durch ein erfindungsgemäßes Tablar im Bereich der Umkantung.

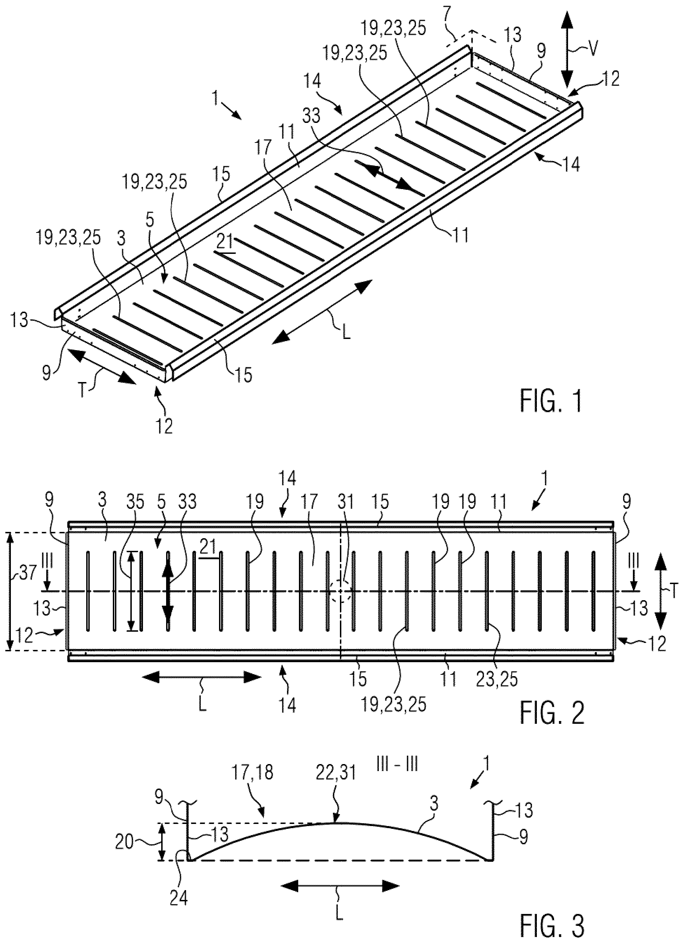

Im Folgenden ist der Aufbau einer ersten vorteilhaften Ausführungsform eines erfindungsgemäßen Tablars 1 mit Bezug auf die Figuren 1 und 2 beschrieben.

Das Tablar 1 dient zur Aufnahme von Lagergut (nicht gezeigt). Dazu besitzt das Tablar 1 einen Boden 3, dessen Bodenfläche 5 von oben her zugänglich ist. Die Bodenfläche 5, auf der das Lagergut abgestellt werden kann, stellt die Oberseite des Bodens 3 dar. Das Volumen, auf dem das Lagergut abgestellt werden kann, ist nach unten durch den Boden 3 begrenzt. Dieses Volumen stellt einen Aufnahmebereich 7 des Tablars 1 dar, welcher in Fig. 1 gestrichelt angedeutet ist.

Das Tablar 1, zumindest der Boden 3, weist, von oben betrachtet eine, im Wesentlichen rechteckige Form auf. Dabei erstrecken sich Schmalseiten 9 des Rechtecks parallel zu einer Tablartiefe bzw. Tiefenrichtung T. Längsseiten 11 der Rechteckform verlaufen quer zu den Schmalseiten 9 und erstrecken sich parallel zu einer Längsrichtung L des Tablars. Da das Tablar 1 in der Regel an wenigstens einer Längsseite 11 zugänglich ist, ist die Längsrichtung L gleichbedeutend mit einer Breitenrichtung des Tablars. Senkrecht zu der Längsrichtung L und zu der Tiefenrichtung T erstreckt sich die Vertikalrichtung V des Tablars, entlang der sich das Tablar 1 in seiner Höhe erstreckt.

An den Schmalseiten 9 weist das Tablar 1 die Umkantungen 13 und an den Längsseiten 11 die Umkantungen 15 auf. Die Umkantungen 13 und 15 dienen zum einen dazu, den Boden 3 bzw. die Bodenfläche 5 quer zur Vertikalrichtung V zu begrenzen. Zum anderen nehmen die Umkantungen 13 und 15 Kräfte auf, die durch den Boden 3 in sie hineingeleitet werden. Die Struktur des Tablars 1 wird dadurch versteift. Letztendlich können die Umkantungen 13 und/oder 15 auch dazu dienen, das Tablar 1 aufzuhängen oder daran zu befördern.

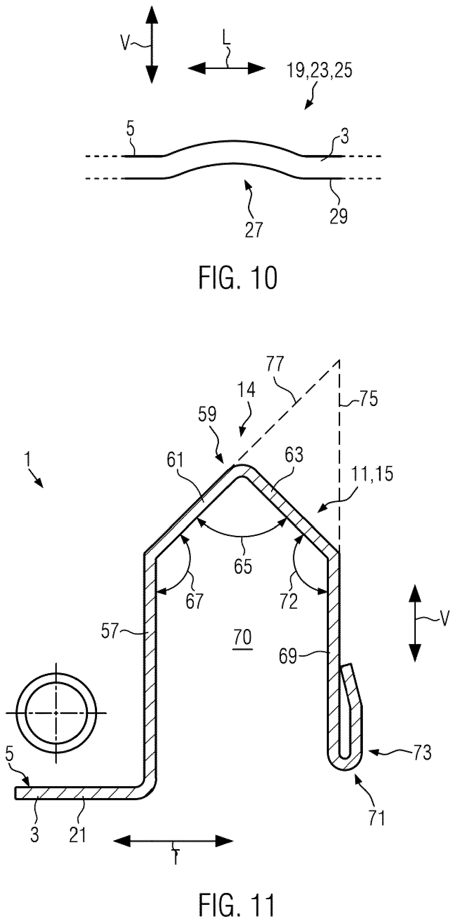

Eine erfindungsgemäße Umkantung 15 ist unten mit Bezug auf die Figur 11 detailliert beschrieben.

Die Schmalseiten 9 und Längsseiten 11 sind in der Regel aus Randbereichen 12 und 14 eines Blechs 21 gebildet, aus dem das Tablar 1 geformt ist. Die Randbereiche 12 liegen dabei an den Schmalseiten 9 und die Randbereiche 14 an den Längsseiten 11.

Der Boden 3 kann eine Wölbung 17, bzw. eine negative Vorspannung aufweisen. Dabei ist der Boden 3 bevorzugt nach oben gewölbt. Die Wölbung 17 in einem unbelasteten Zustand 18 ist in Fig. 3 stark übertrieben dargestellt. Die gestrichelte Linie in Fig. 3 soll zum Vergleich einen ungewölbten Tablarboden darstellen. Die Wölbung 17 erstreckt sich bevorzugt über wenigstens 2/3 des Bodens 3, bzw. der Bodenfläche 5, mehr bevorzugt über den gesamten Boden 3. Die Größe bzw. Höhe 20 der Wölbung 17 ist bevorzugt größer als eine Stärke 41 des Bodens 3 und beträgt bevorzugt zwischen 5 und 15 mm. Die Höhe 20 wird dabei zwischen einem obersten Punkt 22 und einem untersten Punkt 24 der Wölbung 17 gemessen. Da sich die Wölbung 17 bevorzugt über den gesamten Boden 3 des Tablars 1 erstreckt, liegt der oberste Punkt 22 in der Regel im Bereich der Mitte 31 des Tablars 1 beziehungsweise des Bodens 3. Der unterste Punkt 24 liegt in der Regel in der Nähe einer Umkantung 13 oder 15.

Durch die Wölbung 17 des Bodens 3 ist die Tragfähigkeit im Vergleich zu einem Tablar ohne Wölbung erhöht. Wird Lagergut auf die Bodenfläche 5 gestellt, so senkt sich der Boden 3 zunächst, wodurch die Wölbung 17 flacher wird. Bei einem Tablar, welches bereits in einem unbelasteten Zustand nicht gewölbt ist (wie durch die gestrichelte Linie in Fig. 3 angedeutet) würde sich der Boden bei einer gleichen Belastung bereits nach unten durchwölben. Wird der Boden durch die Aufnahme weiteren Lagergutes weiter belastet, so wird sich auch der Boden 3 des Tablars 1 bei einer ausreichend starken Belastung nach unten wölben. Diese Wölbung nach unten fällt aber entsprechend geringer aus als dies bei einem vergleichbaren Tablar ohne vorherige Wölbung nach oben der Fall wäre. Das Tablar 1 wölbt sich entsprechend bei gleicher Belastung weniger stark nach unten durch als ein Tablar ohne die Wölbung nach oben. Da in Lagerliften eine Vielzahl von Tablaren vertikal übereinander angeordnet sind, kann durch die Verwendung des hier beschriebenen Tablars 1 eine höhere Dichte von Tablaren im Lagerlift erreicht werden, da diese entlang der Vertikalrichtung V enger aneinander angeordnet sein können. Bei herkömmlichen Tablaren, die sich stark nach unten durchwölben, muss dagegen ein größerer Freiraum zwischen zwei übereinander angeordneten Tablaren freigehalten werden. Eine Wölbung nach oben ist nicht zwingend erforderlich.

Das Tablar 1 kann auch im unbelasteten Zustand 18 einen horizontal verlaufenden oder sogar nach unten durchgewölbten Boden 3 aufweisen. Dabei ist der Boden 3 jedoch weniger stark nach unten durchgewölbt als er es bei einem vergleichbaren Tablar 1 ohne wenigstens eine plastisch verformte Stelle 19 wäre, auf die im Folgenden eingegangen ist.

Die Ausführungsform mit einer Wölbung 17 bzw. wenigstens einer plastisch verformten Stelle 19 stellt zwar eine bevorzugte Ausführungsform des erfindungsgemäßen Tablars 1 dar, jedoch ist das Vorhandensein der Wölbung 17 bzw. wenigstens einer plastisch verformten Stelle 19 nicht zwingend notwendig. Diese Elemente dienen lediglich dazu, den Boden 3 des Tablars 1 an die erhöhte Belastbarkeit der erfindungsgemäßen Umkantung 13 bzw. 15 anzupassen. Mit anderen Worten soll auch der Boden 3 für eine erhöhte Belastbarkeit ertüchtigt werden.

Die Wölbung 17 des Bodens 3 kann indirekt erzeugt werden. D.h., auf eine direkte Ausformung der Wölbung 17 selbst durch Umformungsverfahren kann verzichtet werden. Stattdessen ist der Boden 3 an wenigstens einer Stelle 19 plastisch verformt. Bevorzugt weist der Boden 3 eine Mehrzahl solcher plastisch verformten Stellen 19 auf. In den Figuren 1 und 2 sind der Übersichtlichkeit halber nicht alle plastisch verformten Stellen 19 mit einem Bezugszeichen versehen. Die wenigstens eine plastisch verformte Stelle 19 ist von Randbereichen 12 und 14 des Tablars 1 beabstandet.

In den plastisch verformten Stellen 19 wird vermutlich Material des Blechs 21, aus dem der Boden 3 geformt ist, seitlich verdrängt. Dabei wird bevorzugt mehr Material in Längsrichtung L als in Tiefenrichtung T verdrängt. Diese Verdrängung von Material kann zu einer Längung des Bodens 3 in Längsrichtung L führen. Da der Boden 3 durch die Umkantungen 13 und 15 jedoch daran gehindert ist, seine Fläche in Längsrichtung L und/oder in Tiefenrichtung T zu vergrößern, wölbt er sich entlang der Vertikalrichtung V nach oben.

Wenigstens eine der plastisch verformten Stellen 19, bevorzugt alle plastisch verformten Stellen 19, sind monolithisch, also einteilig mit dem Boden 3 aus dem Material des blechförmigen Werkstoffs 21, im Folgenden "Blech 21", gebildet. Bevorzugt werden die plastisch verformten Stellen 19 in das Blech 21 eingebracht, bevor die Umkantungen 13 und 15 geformt werden.

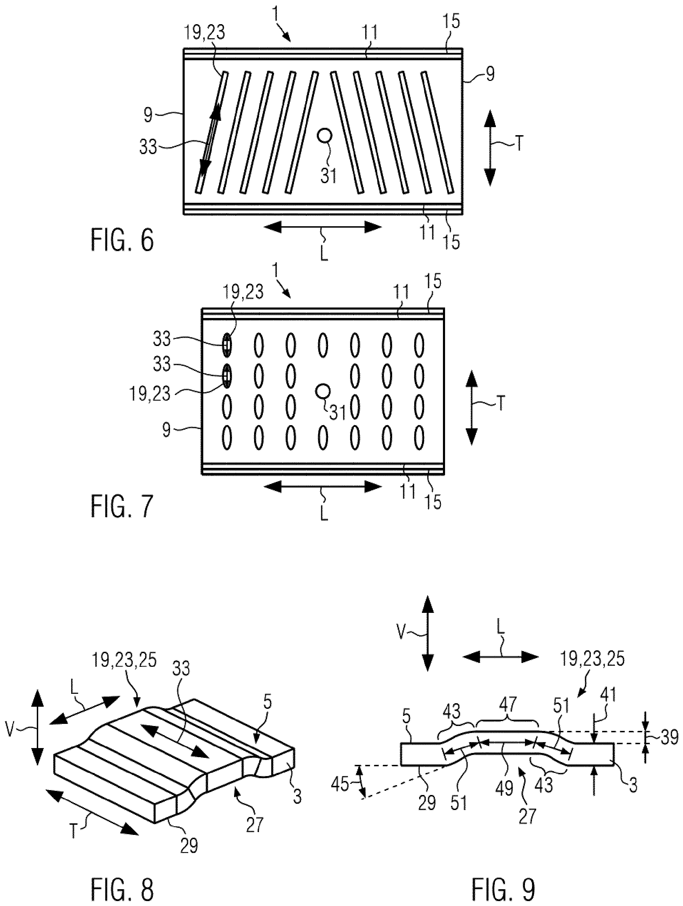

In einer bevorzugten Ausführungsform sind die plastisch verformten Stellen 19 als längliche Vertiefungen 23 gebildet. Die länglichen Vertiefungen 23 stellen dabei bevorzugt Sicken 25 dar. Eine solche längliche Vertiefung 23 bzw. Sicke 25 ist im Detail in den Figuren 8 und 9 dargestellt. Auf diese Figuren soll auch hier Bezug genommen werden.

Jede der plastisch verformten Stellen 19 stellt bevorzugt einen Versatz 27 des Bodens 3 nach oben dar. In diesem Fall bezieht sich der Begriff "Vertiefung" 23 also auf eine Vertiefung 23 an der Unterseite 29, durch die der Boden 3 von der Unterseite 29 nach oben durchgedrückt wird.

Die länglichen Vertiefungen 23 der ersten Ausführungsform verlaufen parallel zueinander und zu den Schmalseiten 9. In Tiefenrichtung T fluchten die länglichen Vertiefungen 23 miteinander, so dass sie alle mit jeweils beiden Enden an parallel zu den Längsseiten 11 verlaufenden gedachten Linien enden. Bevorzugt sind die länglichen Vertiefungen 23 dabei äquidistant angeordnet.

Die Mitte 31 des Tablarbodens 3 ist bevorzugt frei von plastisch verformten Stellen 19. Dabei bezieht sich die Mitte 31 auf die Mitte der Bodenfläche 5 bei einer Betrachtung des Tablarbodens 3 von oben. Dies kann von Vorteil sein, um das Tablar 1 bei seiner Herstellung bzw. das Blech 21 bei seiner Umformung an seiner Mitte 31, beispielsweise mittels eines Drehtellers einer Stanzbiegemaschine, festzuhalten.

Entlang der Tiefenrichtung T sind die länglichen Vertiefungen 23 bevorzugt mittig zwischen den Längsseiten 11 des Tablars 1 angeordnet. D.h., die Abstände zwischen den länglichen Vertiefungen 23 und den Längsseiten 11 bzw. den Umkantungen 13 bzw. 15 sind auf beiden Längsseiten 11 im Wesentlichen gleich, wobei fertigungstechnische Toleranzen im Bereich von 5 % möglich sind.

Die länglichen Vertiefungen 23 erstrecken sich entlang Längsrichtungen 33, welche bevorzugt senkrecht zur Längsrichtung L des Tablars 1 verlaufen. Entlang den Längsrichtungen 33 weisen die länglichen Vertiefungen 23 jeweils bevorzugt eine Länge 35 auf, welche mehr als 1/3 ± 10 % der Tiefe 37 des Tablars 1, beträgt. Besonders bevorzugt weisen die länglichen Vertiefungen 23 jeweils bevorzugt eine Länge 35 auf, welche mehr als 1/3 ± 10 % der Tiefe 37 des Tablars 1 beträgt. Die Tiefe 37 des Tablars 1 bezieht sich dabei auf die Tiefe 37 der Bodenfläche 5.

Der Versatz 27 weist bevorzugt eine Höhe 39 auf, welche höchstens so groß ist wie die Stärke 41 des Bodens 3. Die Höhe 39 des Versatzes 27 wird dabei von der Bodenfläche 5 auf dem Versatz 27 in Bezug auf die Bodenfläche 5 in einem nicht nach oben versetzten Bereich gemessen. Die Stärke 41 des Bodens 3 entspricht bevorzugt der Dicke des zur Herstellung des Bodens 3 verwendeten Blechs 21. Besonders bevorzugt entspricht die Höhe 39 des Versatzes 27 dem 0,4 bis 0,7-fachen der Stärke 41. Die Höhe 39 des Versatzes 27 ist also bevorzugt geringer als die Höhe 20 der Wölbung 17.

Für den Fall, dass die wenigstens eine plastisch verformte Stelle 19 durch eine Sicke 25 gebildet ist, entspricht die Höhe 39 des Versatzes 27 der Sickenhöhe. Alternativ dazu kann der wenigstens eine Versatz 27 auch eine Höhe 39 aufweisen, welche größer als die Stärke 41 des Bodens 3 ist.

Gemäß einer vorteilhaften Ausgestaltung, wie sie auch in den Figuren 8 und 9 dargestellt ist, weist die wenigstens eine längliche Vertiefung 23 bzw. die Sicke 25 einen Querschnitt quer zur Längsrichtung 33 der länglichen Vertiefung 23 auf, welcher trapezförmig ist. Mit anderen Worten weist die längliche Vertiefung 23 im Querschnitt zwei zueinander spiegelsymmetrische Schenkel 43 auf, welche in einem Winkel 45 zur unverformten Bodenfläche 5 verlaufen. Der Winkel 45 beträgt bevorzugt zwischen 25° und 35°. Zwischen den beiden Schenkeln 43 erstreckt sich der im Wesentlichen gerade Bereich 47. Der gerade Bereich 47 weist bevorzugt eine sich quer zur Längsrichtung 33 der länglichen Vertiefung 23 erstreckende Länge 49 auf, welche länger ist als die Längen 51 der Schenkel 43. Die längliche Vertiefung 23 weist also insgesamt eine flache Form auf. Der gerade Bereich 47 muss nicht zwingend exakt gerade verlaufen. Er kann auch fertigungstechnisch bedingt eine leichte Wölbung nach oben aufweisen.

Alternativ oder zusätzlich kann wenigstens eine längliche Vertiefung 23 einen halbrunden Querschnitt aufweisen. Im Falle eines halbrunden Querschnitts wölbt sich die konvexe Seite bevorzugt nach oben in den Aufnahmebereich 7. Ein solcher Querschnitt ist in der Figur 10 dargestellt. Da der trapezförmige Querschnitt aus den Figuren 8 und 9 fertigungstechnisch bedingt nicht zwingend scharfe Übergänge aufweist, können diese auch abgerundet sein, so dass die Querschnittsform insgesamt der halbrunden Form der Figur 10 ähneln kann. Je runder die Übergänge sind, desto stärker nähert sich die Trapezform der halbrunden Form an. Darüber hinaus sind auch andere Querschnitte, insbesondere solche, wie sie für Sicken bekannt sind, möglich.

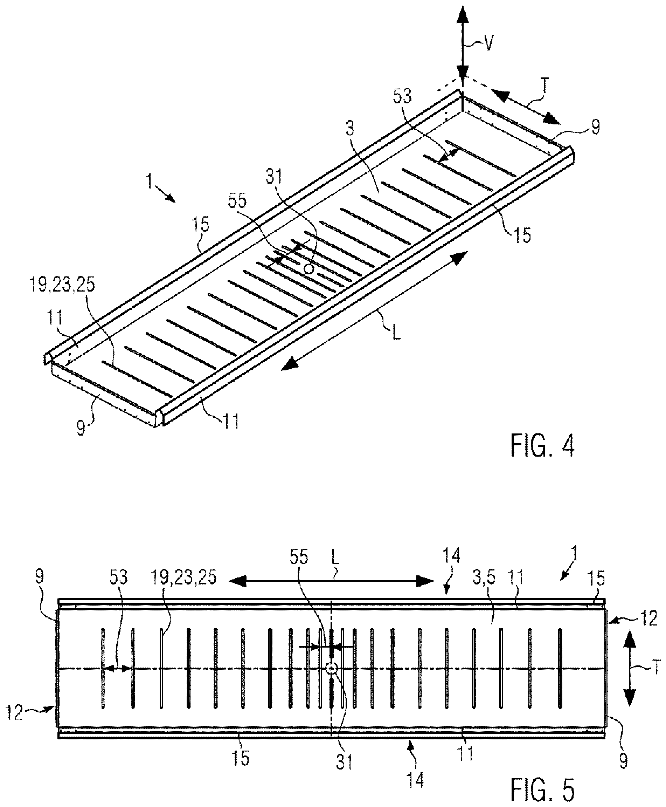

Im Folgenden ist eine weitere vorteilhafte Ausführungsform eines erfindungsgemäßen Tablars 1 mit Bezug auf die Figuren 4 und 5 beschrieben. Der Kürze halber ist dabei nur auf die Unterschiede zu der mit Bezug auf die Figuren 1 und 2 beschriebenen Ausführungsform eingegangen.

Die zweite Ausführungsform des erfindungsgemäßen Tablars 1 unterscheidet sich von der mit Bezug auf die Figuren 1 und 2 beschriebenen ersten Ausführungsform dadurch, dass die länglichen Vertiefungen 23, bzw. die Sicken 25 nicht äquidistant entlang der Längsrichtung L des Tablars 1 verteilt sind. Stattdessen nehmen die Abstände zweier länglicher Vertiefungen 23 von den Schmalseiten 9 zur Tablarmitte 31 hin ab.

Die Verteilung der länglichen Vertiefungen 23 in Längsrichtung L ist dabei bevorzugt spiegelsymmetrisch bezüglich einer durch die Mitte 31 und quer zur Längsrichtung L verlaufenden Spiegelebene. Der Abstand 53 zwischen den beiden äußersten länglichen Vertiefungen 23 ist dabei mehr als doppelt so groß wie der Abstand 55 zwischen den beiden der Mitte 31 am nächsten gelegenen länglichen Vertiefungen 23.

Auf der Höhe der Tablarmitte 31 befindet sich eine längliche Vertiefung 23, welche im Bereich der Mitte 31 unterbrochen ist, um, wie bei der zuvor beschriebenen Ausführungsform, die Mitte 31 selbst freizuhalten, insbesondere für den Drehteller einer Stanzbiegemaschine.

Die Figuren 6 und 7 zeigen lediglich schematisch zwei weitere Beispiele für die Ausprägung von plastisch verformten Stellen 19 des erfindungsgemäßen Tablars 1. Die plastisch verformten Stellen 19 des Tablars 1 in Figur 6 sind als längliche Vertiefungen 23 gebildet, welche wie die zuvor beschriebenen länglichen Vertiefungen 23 ausgebildet sein können.

Im Unterschied zu der mit Bezug auf die Figuren 1 und 2 beschriebenen Ausführungsform verlaufen die Längsrichtungen der länglichen Vertiefungen 23 jedoch nicht parallel zu den Schmalseiten 9 bzw. senkrecht zu den Längsseiten 11. Stattdessen sind die länglichen Vertiefungen 23 schräg angeordnet, wobei sie in einem Winkel von kleiner als 45° zu den Schmalseiten 9 verlaufen. Dabei verlaufen die länglichen Vertiefungen 23 gruppenweise parallel. Auch hier ist die Verteilung der länglichen Vertiefungen 23 bevorzugt symmetrisch mit Bezug auf eine durch die Mitte 31 und quer zur Längsrichtung L verlaufende Spiegelebene.

Lediglich beispielhaft sind die länglichen Vertiefungen 23 auf einer Hälfte des Tablars äquidistant zueinander angeordnet. Alternativ dazu können die Abstände zwischen zwei benachbarten länglichen Vertiefungen 23 auch variieren.

Eine weitere mögliche Ausgestaltung der plastisch verformten Stellen 19 ist in Figur 7 gezeigt. Die Ausgestaltung ähnelt der der ersten mit Bezug auf die Figuren 1 und 2 beschriebenen Ausführungsform.

Im Unterschied zu der ersten Ausführungsform sind die länglichen Vertiefungen 23 jedoch nicht durchgängig gebildet. Stattdessen weist die in Figur 7 gezeigte Ausführungsform Reihen von länglichen Vertiefungen 23 auf, welche sich entlang der Tiefenrichtung T des Tablars 1 aneinandergereiht erstrecken. Dabei weist jede der länglichen Vertiefungen 23 eine Längsrichtung 33 auf, welche bevorzugt ebenfalls parallel zur Tiefenrichtung T verläuft. Mit anderen Worten ähnelt diese Ausgestaltung der der ersten Ausführungsform mit dem Unterschied, dass die länglichen Vertiefungen 23 mehrfach unterbrochen sind.

Die Figur 11 zeigt einen Querschnitt durch eine Umkantung 15 einer Längsseite 11. Auch die gegenüberliegende Umkantung 15 kann entsprechend geformt sein. Im Folgenden ist die erfindungsgemäße Umkantung jedoch nur mit Bezug auf eine Umkantung 15 beschrieben. Ebenso ist es möglich, dass wenigstens eine der Umkantungen 13 entsprechend der Erfindung geformt ist.

Die wenigstens eine Umkantung 15 ist bevorzugt monolithisch mit dem Boden 3 aus dem Blech 21 durch Umformung bzw. Umkanten gebildet. Der Boden 3 kann mit wenigstens einer plastisch verformten Stelle 19 versehen sein. Dies ist jedoch nicht zwingend.

Die Umkantung 15 weist einen Vertikalabschnitt 57 auf, welcher sich quer zum Boden 3 nach oben, also entlang der Vertikalrichtung V erstreckt. Der Vertikalabschnitt 57 begrenzt den Boden 3 des Tablars 1 und stellt eine Seitenwand für das Tablar 1 dar.

An den Vertikalabschnitt 57 schließt sich ein dachförmiger Abschnitt 59 an. Der dachförmige Abschnitt 59 ist dabei so angeordnet, dass er in Vertikalrichtung V gesehen nicht mit dem Boden 3 bzw. mit der Bodenfläche 5 überlappt.

Der dachförmige Abschnitt 59 weist bevorzugt die Form eines Satteldachs auf. Die Dachform ist durch die Abschnitte 61 und 63 gebildet, welche einen Winkel 65 zwischen sich einschlie-βen. Der Winkel 65 beträgt bevorzugt zwischen 70° und 110°, bevorzugt 85° bis 95°. Der Abschnitt 61 stellt einen Verstärkungsabschnitt 61 der Umkantung 15 dar. Durch den Verstärkungsabschnitt 61 wird der Vertikalabschnitt 57 nach oben verlängert. Dadurch ist das Flächenträgheitsmoment des Vertikalabschnitts 57 bzw. der Umkantung 15 erhöht und das Tablar 1 kann eine höhere Last aufnehmen. Der Abschnitt 63 stellt einen Beabstandungsabschnitt 63 der Umkantung 15 dar. Auf diesen ist weiter unten eingegangen.

Der Verstärkungsabschnitt 61 und der Vertikalabschnitt 57 schließen den stumpfen Winkel 67 zwischen sich ein. Der Winkel 67 beträgt bevorzugt zwischen 125° und 145°, mehr bevorzugt 135° ± 3°.

An ihrem distalen Ende 71 weist die Umkantung 15 den vertikalen Zugabschnitt 69 auf. Der vertikale Zugabschnitt 69 verläuft bevorzugt parallel zum Vertikalabschnitt 57. Der Zugabschnitt 69 und der Vertikalabschnitt 57 spannen einen Aufnahmeraum 70 zwischen sich auf. Der Aufnahmeraum 70 kann zur Aufnahme eines Zugmittels, beispielsweise eines Hakens oder Fingers einer Zugvorrichtung dienen. Eine solche Vorrichtung kann an dem Zugabschnitt 69 anliegen und das Tablar 1 ziehen. Ebenso kann eine solche Vorrichtung an dem Vertikalabschnitt 57 anliegen und das Tablar 1 schieben. Der Abstand des Zugabschnitts 69 zum Vertikalabschnitt 57 kann, bei vorgegebener Form des Vertikalabschnitt 57 und des Verstärkungsabschnitts 61, durch den Beabstandungsabschnitt 63 eingestellt sein.

Bevorzugt ist der Beabstandungsabschnitt 63 im Querschnitt spiegelsymmetrisch zum Verstärkungsabschnitt 61 gebildet. Dabei verläuft eine Spiegelachse parallel zum Vertikalabschnitt 57 und entlang der Tiefenrichtung T mittig zwischen den Abschnitten 61 und 63. Dadurch entsteht die symmetrische Satteldachform. Bei einer solchen symmetrischen Anordnung entspricht der Winkel 72 zwischen dem Beabstandungsabschnitt 63 und dem Zugabschnitt 69 dem Winkel 67.

An ihrem distalen Ende 71 kann die Umkantung 15 eine Falz 73 aufweisen, in der Material des Blechs 21 nach oben und auf den Zugabschnitt 69 umgeklappt ist.

Die erfindungsgemäße Umkantung 15 ist nicht auf die zuvor beschriebene Form festgelegt. Diese stellt lediglich eine vorteilhafte Ausführungsform dar. Lediglich beispielhaft ist in Fig. 11 anhand der gestrichelten Linie, welche mit dem Bezugszeichen 75 versehen ist, eine weitere mögliche Ausführungsform einer erfindungsgemäßen Umkantung 15 dargestellt.

Bei der weiteren Ausführungsform sind der Verstärkungsabschnitt 61 und der Beabstandungsabschnitt 63 identisch. Mit anderen Worten verlängert der Beabstandungsabschnitt 63 den Verstärkungsabschnitt 61. Von diesem gemeinsamen Abschnitt 77 aus erstreckt sich der Zugabschnitt 69 vertikal nach unten. Zwischen dem gemeinsamen Abschnitt 77 und dem Zugabschnitt 69 ist ein spitzer Winkel eingeschlossen.

Alternativ zu den beiden zuvor beschriebenen Ausführungsformen sind auch Ausführungsformen möglich, welche Zwischenlösungen zwischen den zuvor beschriebenen Ausführungsformen darstellen. Beispielsweise kann sich der Verstärkungsabschnitt 61 der ersten Ausführungsform weiter entlang der gestrichelten Linie erstrecken und dann über einen steiler verlaufenden Beabstandungsabschnitt 63 mit dem Zugabschnitt 69 verbunden sein.

Des Weiteren ist es möglich, dass die Umkantung 15 im Querschnitt eine Halbkreisform aufweist. So können der Verstärkungsabschnitt 61 und der Beabstandungsabschnitt 63 im Querschnitt jeweils die Form eines Viertelkreises aufweisen, sodass insgesamt die Form eines Halbkreises entsteht. Ebenso ist eine Parabelform möglich, bei der aufsteigende Verstärkungsabschnitt 61 in den absteigenden Beabstandungsabschnitt 63 übergeht.

### Bezugszeichenliste

- 1: Tablar
- 3: Boden
- 5: Bodenfläche
- 7: Aufnahmebereich
- 9: Schmalseite
- 11: Längsseite
- 12: Randbereich
- 13: Umkantung
- 14: Randbereich
- 15: Umkantung
- 17: Wölbung
- 18: Unbelasteter Zustand
- 19: Plastisch verformte Stelle
- 20: Höhe der Wölbung
- 21: Blechförmiger Werkstoff
- 22: Oberster Punkt der Wölbung
- 23: Vertiefung
- 24: Unterster Punkt der Wölbung
- 25: Sicke
- 27: Versatz
- 29: Unterseite des Bodens
- 31: Tablarmitte
- 33: Längsrichtung einer länglichen Vertiefung
- 35: Länge einer länglichen Vertiefung
- 37: Tiefe des Tablars
- 39: Höhe des Versatzes
- 41: Stärke des Bodens
- 43: Schenkel
- 45: Winkel
- 47: Gerader Bereich
- 49: Länge des geraden Bereichs
- 51: Schenkellänge
- 53: Abstand zwischen äußeren länglichen Vertiefungen
- 55: Abstand zwischen inneren länglichen Vertiefungen
- 57: Vertikalabschnitt
- 59: Dachförmiger Abschnitt
- 61: Verstärkungsabschnitt
- 63: Beabstandungsabschnitt
- 65: Winkel zwischen Verstärkungsabschnitt und Beabstandungsabschnitt
- 67: Winkel zwischen Vertikalabschnitt und Verstärkungsabschnitt
- 69: Vertikaler Zugabschnitt
- 70: Aufnahmeraum
- 71: Distales Ende der Umkantung
- 72: Winkel zwischen Beabstandungsabschnitt und Zugabschnitt
- 73: Falz
- 75: Weitere Ausführungsform
- 77: Gemeinsamer Abschnitt
- L: Längsrichtung
- T: Tiefenrichtung
- V: Vertikalrichtung

## Patentansprüche

1. Tablar (1) für einen Lagerlift, mit einem Boden (3) zum Abstellen von Lagergut, wobei das Tablar (1) an wenigstens einer Längsseite (11) mit wenigstens einer den Boden (3) begrenzenden Umkantung (13, 15) versehen ist, wobei die Umkantung (13, 15) in einem mit dem Boden (3) verbundenen Vertikalabschnitt (57) im Wesentlichen quer zum Boden (3) verläuft, wobei die Umkantung (13, 15) wenigstens einen Verstärkungsabschnitt (61) aufweist, der sich von dem Vertikalabschnitt (57) weg erstreckt, und wobei der Vertikalabschnitt (57) und der wenigstens eine Verstärkungsabschnitt (61) einen stumpfen Winkel (67) zwischen sich einschließen, **dadurch gekennzeichnet, dass** die Umkantung (13, 15) an ihrem distalen Ende (71) wenigstens einen Zugabschnitt (69) aufweist, an den wenigstens ein Zugelement eines Lagerlifts angreifen kann.

2. Tablar (1) nach Anspruch 1, **dadurch gekennzeichnet, dass** der Vertikalabschnitt (57) und der wenigstens eine Verstärkungsabschnitt (61) einen Winkel (67) zwischen 125° und 145° zwischen sich einschließen.

3. Tablar (1) nach Anspruch 1 oder 2, **dadurch gekennzeichnet, dass** sich der wenigstens eine Verstärkungsabschnitt (61) vom übrigen Tablar (1) weg erstreckt.

4. Tablar (1) nach einem der Ansprüche 1 bis 3, **dadurch gekennzeichnet, dass** der Zugabschnitt (69) und der Vertikalabschnitt (57) einen Aufnahmeraum (70) zur Aufnahme eines Zugmittels zwischen sich aufspannen.

5. Tablar (1) nach einem der Ansprüche 1 bis 4, **dadurch gekennzeichnet, dass** die Umkantung (13, 15) wenigstens einen Beabstandungsabschnitt (63) aufweist, der sich zwischen dem Vertikalabschnitt (57) und dem wenigstens einen Zugabschnitt (69) erstreckt.

6. Tablar (5) nach Anspruch 5, **dadurch gekennzeichnet, dass** der Beabstandungsabschnitt (63) identisch mit dem Verstärkungsabschnitt (61) ist.

7. Tablar (1) nach Anspruch 5 oder 6, **dadurch gekennzeichnet, dass** der wenigstens eine Beabstandungsabschnitt (63) und der wenigstens eine Verstärkungsabschnitt (61) einen Winkel (65) zwischen 70° und 110° zwischen sich einschließen.

8. Tablar (1) nach einem der Ansprüche 5 bis 7, **dadurch gekennzeichnet, dass** der wenigstens eine Beabstandungsabschnitt (63) mit dem wenigstens einen Verstärkungsabschnitt (61) einen im Wesentlichen dachförmigen, insbesondere satteldachförmigen, Querschnitt bildet.

9. Tablar (1) nach einem der Ansprüche 1 bis 8, **dadurch gekennzeichnet, dass** sich der wenigstens eine Zugabschnitt (69) quer zum Boden (3) erstreckt.

10. Tablar (1) nach einem der Ansprüche 1 bis 9, **dadurch gekennzeichnet, dass** der wenigstens eine vertikale Zugabschnitt (69) parallel zum Vertikalabschnitt (57) verläuft.

11. Tablar (1) nach einem der Ansprüche 1 bis 10, **dadurch gekennzeichnet, dass** das Tablar (1) als Biegeteil gebildet ist.

12. Tablar (1) nach einem der Ansprüche 1 bis 11, **dadurch gekennzeichnet, dass** wenigstens zwei, bevorzugt alle, der folgenden Elemente monolithisch miteinander gebildet sind: Boden (3), Vertikalabschnitt (57), Verstärkungsabschnitt (61), Beabstandungsabschnitt (63), Zugabschnitt (69).

13. Tablar (1) nach einem der Ansprüche 1 bis 12, **dadurch gekennzeichnet, dass** der Boden (3) des Tablars (1) an wenigstens einer von wenigstens einem Randbereich (12) beabstandeten Stelle wenigstens eine Sicke (25) aufweist.

## Claims

1. Tray (1) for a storage lift, with a base (3) for placing storage goods, wherein the tray (1) is provided on at least one longitudinal side (11) with at least one folded edge (13, 15) delimiting the base (3), and wherein the folded edge (13, 15) extends substantially transversely to the base (3) in a vertical section (57) connected to the base (3), wherein the folded edge (13, 15) has at least one reinforcement section (61) extending away from the vertical section (57), and wherein the vertical section (57) and the at least one reinforcement section (61) form an obtuse angle (67) therebetween, **characterized in that** the folded edge (13, 15) has at its distal end (71) at least one traction section (69) on which at least one traction element of a storage lift can engage.

2. Tray (1) according to claim 1, **characterized in that** the vertical section (57) and the at least one reinforcement section (61) form an angle (67) between them of between 125° and 145°.

3. Tray (1) according to claim 1 or 2, **characterized in that** the at least one reinforcement section (61) extends away from the remainder of the tray (1).

4. Tray (1) according to one of claims 1 to 3, **characterized in that** the traction section (69) and the vertical section (57) span a receiving space (70) for receiving a traction means between them.

5. Tray (1) according to one of claims 1 to 4, **characterized in that** the folded edge (13, 15) comprises at least one spacer section (63) extending between the vertical section (57) and the at least one traction section (69).

6. Tray (5) according to claim 5, **characterized in that** the spacer section (63) is identical to the reinforcement section (61).

7. Tray (1) according to claim 5 or 6, **characterized in that** the at least one spacer section (63) and the at least one reinforcement section (61) form an angle (65) between them of between 70° and 110°.

8. Tray (1) according to one of claims 5 to 7, **characterized in that** the at least one spacer section (63) forms with the at least one reinforcement section (61) a substantially roof-shaped, in particular gable roof-shaped, cross-section.

9. Tray (1) according to one of claims 1 to 8, **characterized in that** the at least one traction section (69) extends transversely to the base (3).

10. Tray (1) according to one of claims 1 to 9, **characterized in that** the at least one vertical traction section (69) runs parallel to the vertical section (57).

11. Tray (1) according to one of claims 1 to 10, **characterized in that** the tray (1) is formed as a bent part.

12. Tray (1) according to one of claims 1 to 11, **characterized in that** at least two, preferably all, of the following elements are monolithically formed together: base (3), vertical section (57), reinforcement section (61), spacer section (63), traction section (69).

13. Tray (1) according to one of claims 1 to 12, **characterized in that** the base (3) of the tray (1) has at least one bead (25) at at least one location spaced from at least one edge region (12).

## Revendications

1. Plateau (1) pour un monte-charge, comprenant un fond (3) pour le dépôt de marchandises, dans lequel le plateau (1) est pourvu d'au moins un rebord (13, 15) délimitant le fond (3) au niveau d'au moins un côté longitudinal (11), dans lequel le rebord (13, 15) s'étend sensiblement transversalement par rapport au fond (3) dans une partie verticale (57) reliée au fond (3), dans lequel le rebord (13, 15) présente au moins une partie de renforcement (61) qui s'étend à l'écart à partir de la partie verticale (57), et dans lequel la partie verticale (57) et la au moins une partie de renforcement (61) forment entre elles un angle obtus (67), **caractérisée en ce que** le rebord (13, 15) présente au niveau de son extrémité distale (71) au moins une partie de traction (69) au niveau de laquelle au moins un élément de traction d'un monte-charge peut venir en prise.

2. Plateau (1) selon la revendication 1, **caractérisé en ce que** la partie verticale (57) et la au moins une partie de renforcement (61) forment entre elles un angle (67) compris entre 125° et 145°.

3. Plateau (1) selon la revendication 1 ou 2, **caractérisé en ce que** la au moins une partie de renforcement (61) s'étend à l'écart du reste du plateau (1).

4. Plateau (1) selon l'une des revendications 1 à 3, **caractérisé en ce que** la partie de traction (69) et la partie verticale (57) ouvrent entre elles un espace de réception (70) pour la réception d'un moyen de traction.

5. Plateau (1) selon l'une des revendications 1 à 4, **caractérisé en ce que** le rebord (13, 15) présente au moins une partie d'espacement (63) qui s'étend entre la partie verticale (57) et la au moins une partie de traction (69).

6. Plateau (5) selon la revendication 5, **caractérisé en ce que** la partie d'espacement (63) est identique à la partie de renforcement (61).

7. Plateau (1) selon la revendication 5 ou 6, **caractérisé en ce que** la au moins une partie d'espacement (63) et la au moins une partie de renforcement (61) forment entre elles un angle (65) compris entre 70° et 110°.

8. Plateau (1) selon l'une des revendications 5 à 7, **caractérisé en ce qu'**au moins une partie d'espacement (63) forme avec au moins une partie de renforcement (61) une partie transversale sensiblement en forme de toit, en particulier en forme de toit en pente.

9. Plateau (1) selon l'une des revendications 1 à 8, **caractérisé en ce que** la au moins la au moins une partie de traction (69) s'étend transversalement par rapport au fond (3).

10. Plateau (1) selon l'une des revendications 1 à 9, **caractérisé en ce que** le au moins une partie de traction verticale (69) s'étend parallèlement à la partie verticale (57).

11. Plateau (1) selon l'une des revendications 1 à 10, **caractérisé en ce que** le plateau (1) est réalisé sous la forme d'une pièce pliée.

12. Plateau (1) selon l'une des revendications 1 à 11, **caractérisé en ce qu'**au moins deux, de préférence tous les éléments suivants, sont formés de manière monolithique les uns avec les autres : le fond (3), la partie verticale (57), la partie de renforcement (61), la partie d'espacement (63), la partie de traction (69).

13. Plateau (1) selon l'une des revendications 1 à 12, **caractérisé en ce que** le fond (3) du plateau (1) présente au moins une moulure (25) en au moins un emplacement espacé d'au moins une zone de bord (12).
